**Europäisches Patentamt**

**European Patent Office**

**Office européen des brevets**

(19)

(11) Veröffentlichungsnummer : **0 119 473**
**B1**

(12) **EUROPÄISCHE PATENTSCHRIFT**

(45) Veröffentlichungstag der Patentschrift :
12.11.86

(21) Anmeldenummer : 84101603.3

(22) Anmeldetag : 16.02.84

(51) Int. Cl.⁴ : **C 04 B 35/56**

(54) Verfahren zur Herstellung poröser, durchströmbarer Formkörper aus Siliziumkarbid.

(30) Priorität : 18.02.83 DE 3305529

(43) Veröffentlichungstag der Anmeldung :
26.09.84 Patentblatt 84/39

(45) Bekanntmachung des Hinweises auf die Patenterteilung : 12.11.86 Patentblatt 86/46

(84) Benannte Vertragsstaaten :
BE CH FR GB LI NL SE

(56) Entgegenhaltungen :
EP-A- 0 034 328
EP-A- 0 059 899
DE-B- 2 644 503

(73) Patentinhaber : Kernforschungsanlage Jülich Gesellschaft mit beschränkter Haftung
Postfach 1913
D-5170 Jülich 1 (DE)

(72) Erfinder : Dias, Francisco Joachim
Neuburgerstrasse 15
D-5170 Jülich (DE)
Erfinder : Kampel, Marian
Belderweg 9
D-5138 Heinsberg-Oberbruch (DE)
Erfinder : Luhleich, Hartmut, Dr.
Chlodwigplatz 15
D-5160 Düren (DE)

EP 0 119 473 B1

**Beschreibung**

Die Erfindung bezieht sich auf ein Verfahren zur Herstellung poröser, durchströmbarer Formkörper aus Siliziumkarbid.

Ein Verfahren zur Herstellung poröser Formkörper aus Siliziumkarbid ist aus der DE-OS 30 05 587 bekannt. Derartige Formkörper zeichnen sich außer durch hohe Temperatur- und Temperaturwechselbeständigkeit durch eine gute Korrosionsbeständigkeit gegenüber Luft und Wasserdampf aus.

Die nach dem bekannten Verfahren hergestellten porösen Formkörper haben zwar eine durchgehende Porösität, die den Durchtritt eines Mediums zulassen. Zur Verwendung als durchströmbarer Formkörper, beispielsweise als Heißgasfilter, Durchströmungselektrode, Katalysatorträger o. dgl. sind die nach dem bekannten Verfahren hergestellten Formkörper jedoch nicht geeignet. Denn in diesen Anwendungsfällen muß die durchströmende Gas- oder Flüssigkeitsmenge groß sein, was mit den bekannten Formkörpern nicht erzielbar ist, da die Poren nur eine Größenordnung bis zu etwa 100 Mikrometer aufweisen.

Es ist Aufgabe der Erfindung, ein Verfahren zur Herstellung poröser Formkörper aus Siliziumkarbid zu schaffen, die das Durchströmen einer genügend großen Gas- oder Flüssigkeitsmenge erlauben, so daß derartige Formkörper als Heißgasfilter, Durchströmungselektroden, Katalysatorträger o. dgl. eingesetzt werden können.

Die der Erfindung zugrunde liegende Aufgabe wird dadurch gelöst, daß ein aus Kohlenstoffpulver oder Kohlenstoffpulver und Silizium und/oder Siliziumkarbidpulver und einem verkokbaren organischen Binder gebildetes Mischpulver zu einem grünen Vorkörper geformt wird, worauf der Vorkörper in nach Möglichkeit grobe Körner zerkleinert und aus dem erhaltenen körnigen Material eine in Abhängigkeit von der vorgesehenen Durchlässigkeit des zu bildenden Formkörpers im Bereich zwischen 0,2 bis 10 mm liegende Kornfraktion herausgesiebt wird, daß aus der erhaltenen Kornfraktion ein zweiter Grünkörper geformt wird, wobei der hierbei angewendete Preßdruck geringer ist, je größer die gewünschte Durchlässigkeit des zu bildenden Formkörpers ist, worauf der zweite Grünkörper in einer Inertgasatmosphäre oder im Vakuum durch Aufheizen auf eine Temperatur im Bereich von 600 °C bis 1 000 °C verkokt wird, und worauf für den Fall, daß das Mischpulver neben dem Binder aus Kohlenstoffpulver oder Kohlenstoffpulver mit einer Beimischung von Siliziumkarbid besteht, die Umsetzung zu Siliziumkarbid durch Eintauchen des verkokten Formkörpers in ein Siliziumbad oder durch Einwirken von Siliziumdampf auf den Formkörper bei einer Temperatur im Temperaturbereich von etwa 1 400 °C und 1 900 °C erfolgt, und für den Fall, daß das Mischpulver neben dem Binder Kohlenstoffpulver und Siliziumpulver und ggf. Siliziumkarbid in Beimengung enthält, der Formkörper nach der Verkokung auf eine Temperatur von etwa 1 400 °C bis 1 900 °C schnell aufgeheizt wird, wobei sich das Silizium mit dem Kohlenstoff zu Siliziumkarbid umsetzt. Beim Eintauchen des Formkörpers in ein Siliziumbad muß darauf geachtet werden, daß das freie Silizium möglichst aus den großen Poren entfernt wird, bevor der Körper abgekühlt wird.

Die Mischung des Ausgangspulvers mit dem verkokbaren Binder kann mittels Knetern oder Mischern erfolgen. Besonders vorteilhaft ist es jedoch, wenn bei der Herstellung des Mischpulvers gemäß der aus der DE-OS 30 05 587 bekannten Verfahrensweise vorgegangen wird. Denn dadurch ist gewährleistet, daß der Vorkörper eine vergleichsweise hohe Porösität und eine relativ große Festigkeit aufweist.

Es ist daher zweckmäßig, daß zur Herstellung des Mischpulvers, das aus Pech, Teer, Kunstharz o. dgl. bestehende bindemittel zunächst in einer Flüssigkeit, in der zuvor das aus gemahlenem Koks, Elektrographit, Naturgraphit, Kohle aus Holz oder anderen Zellstoffen und/oder Ruß bestehende Kohlenstoffpulver oder das Kohlenstoffpulver und das Silizium und/oder das Siliziumkarbidpulver aufgeschlämmt worden war, ganz oder zum Teil gelöst, und die Lösung sodann in eine Flüssigkeit, mit der das Lösungsmittel mischbar, in der das Bindemittel jedoch nicht oder nur schwer löslich ist, wie Wasser, ingegeben wird, worauf die mit dem Bindemittel überzogenen und sich abgesetzten und dadurch eine schlammige Masse bildenden Körner durch Dekantieren von der überstehenden Flüssigkeit befreit und anschließend getrocknet werden.

Von Vorteil ist ferner, daß die Aufschlämmung in einer Mischkammer mittels einer Mischdüse in die Trägerflüssigkeit so eingespritzt wird, daß die Körner mit dem Bindemittel gleichmäßig überzogen werden.

Die Herstellung des grünen Vorkörpers aus dem Mischpulver geschieht nach bekannten Verfahren wie Gesenk- oder Strangpressen, Schlickern oder ähnlichen Verfahren. Dabei ist es außerdem von Vorteil, daß gemäß der aus der DE-PS 21 33 044 bekannten Verfahrensweise der Schlamm zunächst getrocknet, das dabei gebildete Pulver in die für die Formgebung vorgesehene Form gebracht, anschließend den Dämpfen von Flüssigkeiten, in denen das Bindemittel ganz oder teilweise löslich ist, ausgesetzt und im Anschluß daran getrocknet wird. Der Anteil des Bindesmittels an dem verwendeten Schlamm beträgt dabei mehr als 25 Gew.%. Bei dieser vorgehensweise ist das Pulver auch in komplizierte Formen einbringbar.

Auch zur Bildung des zweiten Grünkörpers ist es von Vorteil, die aus der DE-PS 21 33 044 bekannte Verfahrensweise analog anzuwenden. Hierzu wird die als Ausgangsprodukt für den zweiten Grünkörper vorgesehene Kornfraktion in die für die Formgebung vorgesehene Form gebracht, anschließend den Dämpfen von Flüssigkeiten, in denen das Bindemittel ganz oder teilweise löslich ist, ausgesetzt und im Anschluß daran getrocknet.

Die Zerkleinerung des grünen Vorkörpers erfolgt zweckmäßigerweise mittels eines Backenbrechers, der so eingestellt wird, daß eine Hauptkornfraktion entsprechend der gewünschten Durchlässigkeit des Endkörpers entsteht. Je größer der Gas- bzw. Flüssigkeitsdurchsatz des Endkörpers sein soll, um so größer wird die Korngröße gewählt, was insbesondere durch Auswahl einer entsprechenden Siebfraktion geschieht. Aus einem solchen, aus relativ einheitlicher Körnung bestehenden Pulver wird zweckmäßigerweise mittels Gesenkpressen erneut ein Grünkörper hergestellt, wobei bei gleicher Körnung die Durchlässigkeit des Endkörpers um so größer ist, je geringer der Preßdruck ist.

Bei dieser Verfahrensstufe wirkt sich die Anwendung der aus der DE-OS 30 05 587 bekannten Verfahrensweise zur Herstellung des Mischpulvers auch insofern günstig aus, als infolge des gleichmäßigen Überzugs der Pulverkörner mit der Binderhaut die bei der Herstellung des zweiten Grünkörpers benötigten Preßdrücke sehr niedrig sein können und trotzdem Körper gebildet werden, deren Festigkeit vergleichsweise hoch ist.

Der nach Zerkleinern des Vorkörpers und aus der dabei gewonnenen Kornfraktion gebildete zweite Formkörper besteht aus einem Granulat von Körnern und weist ebenso wie der fertige Endkörper relativ große Poren auf.

### 1. Ausführungsbeispiel

151 g Elektrographitpulver (Hauptkornfraktion 60 μm-80 μm) wurde mit 790 g eines feinkörnigen Siliziumpulvers gemischt und die Pulverkörner dieser Mischung gleichmäßig mit einem Phenolformaldehydharzbinder überzogen. Der Bindergehalt betrug 25 Gew.-%. Diese Pulvermischung wurde gleichmäßig in einen Formkasten eingefüllt (Bodenfläche : 160 mm × 140 mm), dessen Bodenplatte mit Bohrungen von 4 mm Durchmesser versehen war. Der Formkasten wurde vor dem Einfüllen des Pulvers mit 2 Lagen Filterpapier ausgelegt. Nach dem Einfüllen wurde das Pulver wieder mit 2 Lagen Filterpapier bedeckt und ein Stempel aufgesetzt, der entsprechend der Bodenplatte ebenfalls mit Löchern versehen war. Die Masse des Stempels war so gewählt worden, daß er auf die Pulvermasse einen Druck von 150 mbar ausübte. Der so beschickte Formkasten wurde dann in einen auf 70 °C vorgeheizten Trockenschrank gestellt und dieser auf etwa 0,5 mbar evakuiert. Danach wurde Methanoldampf bis zu einem Druck von 600 mbar in den Trockenschrank eingeleitet und dieser wirkte 1/2 Stunde auf die Pulvermasse ein. Danach wurde der Trockenschrank wieder evakuiert und belüftet. Nach dem Abkühlen des Formkastens wurde entformt. Der gebildete Formkörper hatte die Abmessungen 160 mm × 140 mm

× 56 mm und eine geometrische Dichte von 1,2 g/cm³. Der grüne Vorkörper wurde nun zuerst grob gebrochen und dann mittels eines Backenbrechers weiter zerkleinert. Aus dem erhaltenen Korngemisch wurde eine Fraktion von 1,4 mm-2 mm ausgesiebt.

45 g dieser Granulatfraktion wurden in einen rechteckigen Formkasten mit einer Grundfläche von 70 mm × 80 mm gleichmäßig hoch eingefüllt und mit einem Stempel beschwert, dessen Masse so bemessen war, daß ein Druck von 100 mbar auf die Granulatmenge ausgeübt wurde. Der auf diese Weise hergerichtete Formkasten wurde anschließend 2 Stunden lang in einen auf 140 °C vorgeheizten Trockenschrank gestellt und aufgeheizt. Danach wurde der Formkasten wieder herausgenommen und nach dem Erkalten entformt. Der Grünkörper in der Form einer Granulatplatte wurde anschließend in einer Inertgasatmosphäre durch Erhitzen auf 800 °C verkokt. Der verkokte Formkörper wurde schließlich unter Schutzgasatmosphäre durch Aufheizen auf 1 800 °C zu Siliziumkarbid umgesetzt. Er hatte die Abmessungen 76,2 mm × 66,8 mm × 7,4 mm und eine Luftdurchlässigkeit von 1,20 l/cm² min (20 mm WS).

### 2. Ausführungsbeispiel

900 g eines Elektrographitpulvers (Hauptkorngröße 60 μm-80 μm), dessen Körner mit 30 Gew.-% eines Phenolformaldehydbinders umhüllt worden waren, wurden in einen Formkasten eingefüllt und ein Stempel aufgesetzt. Dieser Formkasten wurde dann 2 Stunden in einem auf 110 °C vorgeheizten Trockenschrank erhitzt. Anschließend wurde die Pulvermasse mit 1 Bar Druck zu einem grünen Vorkörper verpreßt und nach dem Erkalten entformt. Der Formkörper hatte eine Dichte von 1,00 g/cm³. Der grüne Vorkörper wurde zunächst grob gebrochen und dann mittels eines Backenbrechers weiter zerkleinert. Aus dem erhaltenen Korngemisch wurden verschiedene Fraktionen herausgesiebt.

40 g Granulat der Körnung 1,4 mm-2,00 mm wurden in einem rechteckigen Formkasten mit einer Grundfläche von 70 mm × 80 mm gleichmäßig eingefüllt und mit einem Stempel beschwert, dessen Masse so bemessen war, daß ein Druck von 50 mbar auf die Granulatmenge ausgeübt wurde. Der Formkasten wurde dann in einen auf 140 °C vorgewärmten Trockenschrank gestellt. Nach dem Aufheizen wurde er wieder herausgenommen und nach dem Erkalten entformt. Der Grünkörper in Form einer Granulatplatte wurde anschließend unter Inertgasatmosphäre durch Erhitzen auf 800 °C verkokt.

Der verkokte Formkörper wurde dann auf die Temperatur eines Siliciumbades oberhalb 1 450 °C gebracht und unter Argonatmosphäre in das Bad getaucht, dabei mit Silicium imprägniert und der Kohlenstoff in Siliciumcarbid umgewandelt. Das in den Poren befindliche Restsilicium wurde nach dem Tauchen bei Temperaturen oberhalb 1 800 °C im Vakuum ausgedampft. Der gebildete Körper hatte eine Luftdurchlässigkeit von 0,8 l/cm² min (20 mm WS).

### 3. Ausführungsbeispiel

Ein entsprechend der Vorschrift von Ausführungsbeispiel 2 hergestellter Siliciumcarbidkörper wurde nach dem Tauchen in ein Siliciumbad aus dem Ofen herausgenommen, abgekühlt und anschließend — anstelle des Ausdampfens des Restsiliciums bei Temperaturen oberhalb 1 800 °C — das in den Poren befindliche Silicium durch Kochen in 10 %-iger Natronlauge entfernt, dann in Wasser gespült und getrocknet. Der gebildete Körper hatte eine Luftdurchlässigkeit von 0,75 l/cm² min (20 mm WS).

**Patentansprüche**

1. Verfahren zur Herstellung poröser, durchströmbarer Formkörper aus Siliziumkarbid, dadurch gekennzeichnet, daß ein aus Kohlenstoffpulver oder Kohlenstoffpulver und Silizium- und/oder Siliziumkarbidpulver und einem verkokbaren organischen Binder gebildetes Mischpulver zu einem grünen Vorkörper geformt wird, worauf der Vorkörper in nach Möglichkeit grobe Körner zerkleinert und aus dem erhaltenen körnigen · Material eine in Abhängigkeit von der vorgesehenen Durchlässigkeit des zu bildenden Formkörpers im Bereich zwischen 0,2 bis 10 mm liegende Kornfraktion herausgesiebt wird, daß aus der erhaltenen Kornfraktion ein zweiter Grünkörper geformt wird, wobei der hierbei angewendete Preßdruck geringer ist, je größer die gewünschte Durchlässigkeit des zu bildenden Formkörpers ist, worauf der zweite Grünkörper in einer Inertgasatmosphäre oder im Vakuum durch aufheizen auf eine Temperatur im Bereich von 600 °C bis 1 000 °C verkokt wird, und worauf für den Fall, daß das Mischpulver neben dem Binder aus Kohlenstoffpulver oder Kohlenstoffpulver mit einer Beimischung von Siliziumkarbid besteht, die Umsetzung zu Siliziumkarbid durch Eintauchen des verkokten Formkörpers in ein Siliziumbad oder durch Einwirken von Siliziumdampf auf den Formkörper bei einer Temperatur im Temperaturbereich von etwa 1 400 °C und 1 900 °C erfolgt, und für den Fall, daß das Mischpulver neben dem Binder Kohlenstoffpulver und Siliziumpulver und ggf. Siliziumkarbid in Beimengung enthält, der Formkörper nach der Verkokung auf eine Temperatur von etwa 1 400 °C bis 1 900 °C schnell aufgeheizt wird, wobei sich das Silizium mit dem Kohlenstoff zu Siliziumkarbid umsetzt.

2. Verfahren nach Anspruch 1, dadurch gekennzeichnet, daß zur Herstellung des Mischpulvers das aus Pech, Teer, Kunstharz o. dgl. bestehende Bindemittel zunächst in einer Flüssigkeit, in der zuvor das aus gemahlenem Koks, Elektrographit, Naturgraphit, Kohle aus Holz oder anderen Zellstoffen und/oder Ruß bestehende Kohlenstoffpulver oder das Kohlenstoffpulver und das Silizium und/oder das Siliziumkarbidpulver aufgeschlämmt worden war, ganz oder zum Teil gelöst, und die Lösung sodann in eine Flüssigkeit, mit der das Lösungsmittel mischbar, in der das Bindemittel jedoch nicht oder nur schwer löslich ist, wie Wasser, eingegeben wird, worauf die mit dem Bindemittel überzogenen und sich abgesetzten und dadurch eine schlammige Masse bildenden Körner durch Dekantieren von der überstehenden Flüssigkeit befreit und anschließend getrocknet werden.

3. Verfahren nach Anspruch 2, dadurch gekennzeichnet, daß die Aufschlämmung in einer Mischkammer mittels einer Mischdüse in die Trägerflüssigkeit so eingespritzt wird, daß die Körner mit dem Bindemittel gleichmäßig überzogen werden.

4. Verfahren nach Anspruch 2 oder 3, dadurch gekennzeichnet, daß zur Bildung des grünen Vorkörpers der Schlamm zunächst getrocknet, das dabei gebildete Pulver in die für die Formgebung vorgesehene Form gebracht, anschließend den Dämpfen von Flüssigkeiten, in denen das Bindemittel ganz oder teilweise löslich ist, ausgesetzt und im Anschluß daran getrocknet wird.

5. Verfahren nach einem der Ansprüche 2 bis 4, dadurch gekennzeichnet, daß der Anteil des Bindemittels in dem verwendeten Schlamm mehr als 25 Gew.% beträgt.

6. Verfahren nach einem der Ansprüche 1 bis 5, dadurch gekennzeichnet, daß zur Bildung des zweiten Grünkörpers die Kornfraktion in die für die Formgebung vorgesehene Form gebracht, anschließend den Dämpfen von Flüssigkeiten, in denen das Bindemittel ganz oder teilweise löslich ist, ausgesetzt und im Anschluß daran getrocknet wird.

**Claims**

1. Method of producing porous flow-through shaped silicon carbide bodies, characterised in that a mixed powder formed of carbon powder, or carbon powder and silicon powder and/or silicon carbide powder, and of a cokable organic binder is shaped to form a green preliminary body, whereupon the preliminary body is comminuted into as far as possible coarse grains, and from the granular material thus obtained there is screened out a grain fraction in the range of 0.2 to 10 mm in dependence on the proposed permeability of the shaped body to be formed, that a second green body is shaped from the grain fraction obtained, the moulding pressure used here being smaller in proportion as the desired permeability of the shaped body to be formed is greater, whereupon the second green body is coked under vacuum or in an inert gas atmosphere by heating to a temperature in the range of 600 °C to 1 000 °C, and whereupon in cases where the mixed powder comprises, besides the binder, carbon powder or carbon powder with an admixture of silicon carbide, the reaction to give silicon carbide occurs by immersing the coked shaped body in a silicon bath or by the action of silicon vapour on the shaped body at a temperature in the temperature range of approximately 1 400 °C and 1 900 °C, and in cases where the mixed powder comprises, besides the binder, carbon powder and silicon powder and possibly silicon carbide in admixture the shaped body after the coking operation is quickly heated to a temperature of approximately 1 400 °C to 1 900 °C, on which the silicon reacts with the carbon to give silicon carbide.

2. Method according to claim 1, characterised in that, to produce the mixed powder, the binder consisting of pitch, tar, synthetic resin or the like is first of all wholly dissolved or partly dissolved in a liquid in which previously the carbon powder consisting of ground coke, electrographite, natural graphite, carbon from wood or from other celluloses, and/or soot, or the carbon powder and the silicon and/or the silicon carbide powder, has been put in suspension, and the solution is then introduced into a liquid with which the solvent is mixable but in which the binder is not soluble or is only difficulty soluble, such as water, whereupon the grains, coated with binder and settled, and thus forming a sludgy mass, are freed from the superjacent liquid by decantation and then dried.

3. Method according to claim 2, characterised in that the suspension is so sprayed into the carrier liquid in a mixing chamber by means of a mixing nozzle that the grains are uniformly coated with the binder.

4. Method according to claim 2 or 3, characterised in that for forming the green preliminary body the sludge is first dried, the powder thus formed is put into the mould intended for shaping, then subjected to the action of the vapours of liquids in which the binder is wholly or partly soluble, and is then dried.

5. Method according to one of claims 2 to 4, characterised in that the proportion of binder in the sludge used amounts to more than 25 % by weight.

6. Method according to one of claims 1 to 5, characterised in that for forming the second green body the grain fraction is put into the mould intended for shaping, then is subjected to the action of the vapours of liquids wherein the binder is wholly or partly soluble, and is then dried.

**Revendications**

1. Procédé de fabrication de corps moulés, poreux et susceptibles d'être traversés par un fluide, en carbure de silicium, caractérisé en ce qu'il consiste à mouler, en une ébauche à vert, un mélange de poudres constitué de poudre de carbone ou de poudre de carbone et de poudre de silicium .et/ou de carbure de silicium et d'un liant organique cokéfiable, puis à fragmenter l'ébauche, autant que possible en grains grossiers, et à extraire, par tamisage du matériau en grains obtenu, une fraction granulométrique comprise, en fonction de la perméabilité prévue du corps moulé à former, entre 0,2 et 10 mm, à mouler un second corps à vert en la fraction granulométrique obtenue, la pression d'application utilisée étant d'autant plus petite que la perméabilité souhaitée pour le corps moulé à former est plus grande, puis à cokéfier le second corps à vert dans une atmosphère de gaz inerte ou sous vide par chauffage à une température de l'ordre de 600 °C à 1 000 °C, puis, dans le cas où le mélange de poudres est constitué, outre du liant, de poudre de carbone ou de poudre de carbone avec une addition de carbure de silicium, à effectuer la transformation en carbure de silicium par immersion du corps moulé cokéfié dans un bain de silicium ou par action de vapeurs de silicium sur le corps moulé, à une température de l'ordre de 1 400 °C à 1 900 °C environ, et, pour le cas où le mélange de poudres contient, outre le liant, de la poudre de carbone et de la poudre de silicium et, le cas échéant, du carbure de silicium à titre d'additif, à porter rapidement le corps moulé après la cokéfaction à une température de 1 400 °C à 1 900 °C environ, le silicium réagissant sur le carbone pour donner du carbure de silicium.

2. Procédé suivant la revendication 1, caractérisé en ce qu'il consiste, pour préparer le mélange de poudres, à dissoudre en tout ou partie le liant constitué de poix, de goudron, de résine synthétique ou de produits similaires, d'abord dans un liquide dans lequel on a mis au préalable en suspension la poudre de carbone constituée de coke broyé, d'électrographite, de graphite naturel, de charbon de bois ou d'autres substances cellulosiques et/ou de suie, ou la poudre de carbone et le silicium et/ou la poudre de carbure de silicium et à verser immédiatement la solution dans un liquide avec lequel le solvant est miscible, mais dans lequel le liant n'est pas soluble ou ne l'est que peu, comme de l'eau, puis à débarrasser, par décantation, du liquide surnageant les grains ou les particules enrobés du liant et se déposant en formant une masse boueuse, et ensuite à les sécher.

3. Procédé suivant la revendication 2, caractérisé en ce qu'il consiste à projeter la suspension dans le liquide porteur, dans une chambre de mélange au moyen d'une buse de mélange, de manière que les grains soient enrobés de liant d'une manière uniforme.

4. Procédé suivant la revendication 2 ou 3, caractérisé en ce qu'il consiste, pour former l'ébauche à vert, à sécher d'abord la boue, à mettre la poudre ainsi formée dans le moule prévu pour le façonnage, à la soumettre ensuite aux vapeurs de liquides dans lesquels le liant est entièrement ou partiellement soluble, et ensuite à la sécher.

5. Procédé suivant l'une des revendications 2 à 4, caractérisé en ce que la proportion du liant dans la boue utilisée représente plus de 25 % en poids.

6. Procédé suivant l'une des revendications 1 à 5, caractérisé en ce qu'il consiste, pour former le second corps à vert, à mettre la fraction granulométrique dans le moule prévu pour le façonnage, ensuite à la soumettre à la vapeur de liquides dans lesquels le liant est partiellement ou entièrement soluble, et ensuite à la sécher.